# EUROPÄISCHE PATENTANMELDUNG

(11) **EP 1 008 798 A1**
(43) Veröffentlichungstag der Anmeldung: **14.06.2000**
(21) Anmeldenummer: 99124013.6
(22) Anmeldetag: 06.12.1999
(51) Int. Cl.: F16M 11/42

(54) **Kamera-Fahrvorrichtung**

(30) Priorität: 09.12.1998 DE 19856701
(71) Anmelder: Andreas Meyer Camera-Moving-Systems GmbH, 67806 Rockenhausen (DE)
(72) Erfinder: Meyer, Andreas, 67806 Rockenhausen (DE)
(74) Vertreter: Klein, Friedrich

(57) **Zusammenfassung**

Die Erfindung betrifft eine Kamera-Fahrvorrichtung mit einem mittels vorzugsweise vier Rollenpaaren auf einem Schienenpaar (1) verfahrbaren Wagen (8) für die Kamera, wobei die Achsen der Rollen eines jeden Rollenpaares des Wagens (8) derart an diesem angeordnet sind, daß der Wagen auf den Schienen (2) formschlüssig geführt ist, und mit auf einer Führungsbahn entlang der Fahrstrecke der Kamera bewegbaren Kabelträgern (9), die mit Aufnahmeelementen für das Kabel versehen sind, wobei die Führungsbahn für die Kabelträger (9) von den Schienen (2) für den Wagen gebildet ist, und die Kabelträger (9) jeweils vorzugweise vier Rollenpaare aufweisen, deren Rollen an den Kabelträgern (9) derart angeordnet sind, daß die Kabelträger (9) auf den Schienen (2) des Wagens (8) verfahrbar und formschlüssig geführt sind.

## Beschreibung

Die Erfindung betrifft eine Kamera-Fahrvorrichtung mit einem mittels vier Rollenpaaren auf einem Schienenpaar verfahrbaren Wagen für die Kamera, wobei die Achsen der Rollen eines jeden Rollenpaares des Wagens derart an diesem angeordnet sind, daß der Wagen auf den Schienen formschlüssig geführt ist, und mit auf einer Führungsbahn entlang der Fahrstrecke der Kamera bewegbaren Kabelträgern, die mit Aufnahmeelementen für jeweils mindestens ein Kabel versehen sind,

Zur Durchführung von Photoaufnahmen, insbesondere aber zur Durchführung von Filmaufnahmen ist es oft erforderlich, die entsprechende Kamera in einer Fahrvorrichtung aufzunehmen, um hierdurch eine optimale Aufnahmeposition zu ermöglichen. Solche Fahrvorrichtungen sind entweder mit üblichen Laufrädern ausgestattet und somit auf ebenem Untergrund frei bewegbar, oder sie weisen einen mittels Rollen auf einem Schienenpaar verfahrbaren Wagen auf. Das Schienenpaar wird dabei auf einer Unterlage verlegt, sodaß der Wagen mit dem eigentlichen Träger für die Kamera auf dem Schienenpaar verfahren werden kann.

Bekannte Fahrvorrichtungen sind dabei hinsichtlich ihrer Schienenausbildung und/oder ihrer Rollenanordnung so gestaltet, daß der Wagen auf den Schienen formschlüssig geführt ist und somit sowohl in normaler Bodenfahrt als auch in Überkopf- oder auch in Steilfahrt bewegbar ist (DE 196 43 805 A1).

Insbesondere bei Außenaufnahmen ist es oft erforderlich, dem eigentlichen Wagen einen oder mehrere Kabelträger zuzuordnen, der dann mit dem Wagen mitbewegt wird. Solche Kabelträger sind meist nach Art einer zweiachsigen Laufkatze ausgebildet und in ihren stirnseitigen Bereichen mit Laufrädern versehen, die entlang einer eigenen Führungsbahn bewegt werden.

Sofern die Laufräder sich entlang einer von einem an seiner Unterseite geschlitzten Rechteckrohr gebildeten Führungsbahn bewegen, sind die Achsen der Laufräder horizontal angeordnet und quer zur Fahrtrichtung gerichtet. Da die Laufräder somit keine, zumindest aber keine ausreichende Seitenführung haben, kommt es insbesondere dann, wenn dem Wagen mehrere Kabelträger zugeordnet sind, und er sich entlang einer gekrümmten Fahrstrecke bewegt, zu Schwergang. Die Länge der mit solchen Kabelträgern befahrbaren gekrümmt verlaufenden Fahrstrecken ist dadurch sehr begrenzt.

Diese längenmäßige Begrenzung der Fahrstrecke tritt bei Kabelträgern, die sich mit ihren Laufrollen an mehreren Seiten ihrer Führungsbahn abstützen, in nur vermindertem Ausmaß auf. Hierzu ist es allgemein üblich, eine Führungsbahn mit quadratischem Querschnitt zu benützen, die so angeordnet ist, daß eine Diagonale des quadratischem Querschnittes in der Längsmittel-ebene der Führungsbahn verläuft, und die Achsen der Laufrollen zur Längsmittelebene der Führungsbahn einen Winkel von jeweils 45° einschließen. Obwohl die Laufflächen der Laufrollen parallel zu ihrer jeweiligen Anlagefläche verlaufen, ist auch bei gekrümmt verlaufenden Fahrstrecken deren Gesamtlänge trotz des relativ großen Aufwandes für die Führungsbahn noch begrenzt.

Der Erfindung liegt daher die Aufgabe zu Grunde, eine gattungsgemäße Kamera-Fahrvorrichtung sowie deren Kabelträger derart auszubilden, daß der Gesamtaufwand für die Kamera-Fahrvorrichtung wesentlich reduziert wird, ohne hierbei die Gesamtlänge der Fahrstrecke durch die Fahrverhältnisse der Kabelträger zu beschränken.

Diese Aufgabe wird ausgehend von einer gattungsgemäßen Kamera-Fahrvorrichtung dadurch gelöst, daß die Führungsbahn für die Kabelträger von den Schienen für den Wagen gebildet ist, und die Kabelträger jeweils vier Rollenpaare aufweisen, deren Rollen an den Kabelträgern derart angeordnet sind, daß die Kabelträger auf den Schienen des Wagen verfahrbar und formschlüssig geführt sind.

Mit der erfindungsgemäßen Lösung wird die Funktion der seither verwendeten Führungsbahn für die Kabelträger vollständig auf die Schienen des Wagens für die Kamera übertragen. Die seither eigene Führungsbahn für die Kabelträger kann somit ersatzlos entfallen. Da für die Kabelträger somit die gleiche Anordnung und Ausbildung der Rollen wie beim Wagen verwendet werden kann, wird die Gesamtlänge der Fahrstrecke des Wagens durch die Kabelträger nicht beeinträchtigt.

Eine auch in konstruktiver Hinsicht kostengünstige Lösung ergibt sich ferner dadurch, daß die Anordnung der Rollen an den Kabelträgern in Bezug auf ihre Relativlage zu den Schienen der Anordnung der Rollen am Wagen für die Kamera entspricht.

Eine gesteigerte Kurvengängigkeit von Wagen und Kabelträger kann dadurch erreicht werden, daß die Schienen des Schienenpaares einem im wesentlichen kreisförmigen Querschnitt aufweisen.

Da bei Fahrstrecken mit relativ kleinem Krümmungsradius die momentanen Fahrtrichtungen zwischen dem Wagen einerseits und dem diesem folgenden Kabelträgern bzw zwischen den Kabelträgern andererseits voneinander abweichen, ist es vorteilhaft, wenn die Aufnahmeelemente der Kabelträger um jeweils eine senkrecht zu den Schienen verlaufende Achse schwenkbar sind.

Um zu verhindern, daß beim Auseinanderziehen der einzelnen Kabelschlaufen eine zu große Zugkraft auf das Kabel ausgeübt wird, ist an den Aufnahmeelementen von jeweils zwei einander benachbarten kabelträgern jeweils ein Zugmittel befestigt, dessen gestreckte Länge um einen bestimmten Betrag kleiner als die Länge des an diesen Aufnahmeelementen befestigten Abschnittes des Kabels ist.

Zur Vermeidung eines zu starken Aufprallens des ersten Kabelträgers auf den sich vor ihm befindlichen Wagen, bzw ein zu starkes Aufprallen der Kabelträger untereinander, was insbesondere bei Gefällstrecken nicht immer zu vermeiden ist, ist an mindestens einer der Stirnseiten der Kabelträger und / oder des Wagens jeweils mindestens ein Auflaufpuffer vorgesehen.

Weitere Vorteile und Einzelheiten der Erfindung ergeben sich aus der nachfolgenden Beschreibung zweier in der beigefügten Zeichnung dargestellten Ausführungsbeispiele der Erfindung.

Es zeigt:
- Fig.1:: eine schaubildliche Darstellung eines Kabelträgers sowie eines Wagens mit einem Schienenpaar für Überkopf-Fahrt;
- Fig.2:: eine Schnittdarstellung eines Kabelträgers für Überkopf-Fahrt;
- Fig.3:: eine schaubildliche Darstellung eines Kabelträgers sowie eines Wagens mit einem Schienenpaar für Normal-Fahrt;
- Fig.4:: eine Schnittdarstellung eines Kabelträgers für Normal-Fahrt;

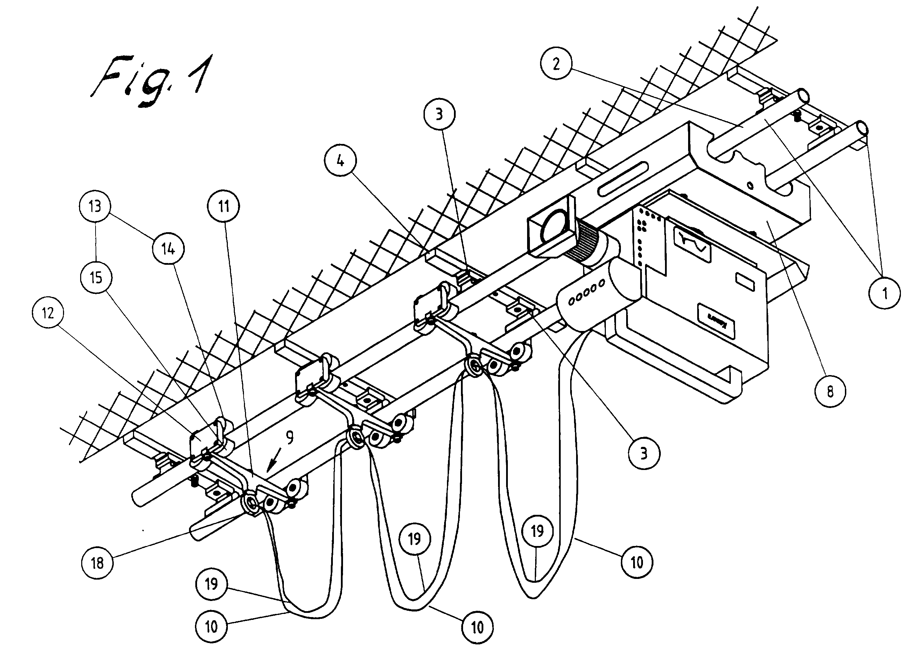

In Fig. 1 ein Schienenpaar 1 einer Kamera-Fahrvorrichtung dargestellt, das von zwei Schienen 2 gebildet ist, die zueinander parallel gerichtet sind und einen kreisförmigen oder kreisringförmigen Querschnitt aufweisen. Die Schienen 2 des Schienenpaares 1 können aus einzelnen Schienenabschnitten zusammengesetzt sein, die an jeweils einem Ende eine Buchse mit einem Innenkonus und am jeweils anderen Ende mit einer Buchse mit einem entsprechenden Konuszapfen versehen sind. Die Schienen 2 sind von im Abstand zueinander angeordneten Schienenträgern 3 aufgenommen, die ihrerseits an Schwellen 4 befestigt sind, die quer zur Längserstreckung der Schienen 2 gerichtet sind. Die Schienenträger 3 weisen zur Aufnahme der Schienen 2 jeweils eine schalenförmige Aufnahme auf, deren Krümmungsradius dem Außendurchmesser der Schienen 2 entspricht. Zur Befestigung der Schienen 2 an den Schienenträgern 3 dienen Schrauben 5, die in innerhalb der kreisringförmigen Schienen 2 angeordnete Muttern 6 eingeschraubt sind. Zur Erleichterung des Positionierens der Muttern 6 während der Montage ist in die kreisringförmigen Schienen 2 ein Streifen 7 aus einem elastischen Material eingelegt.

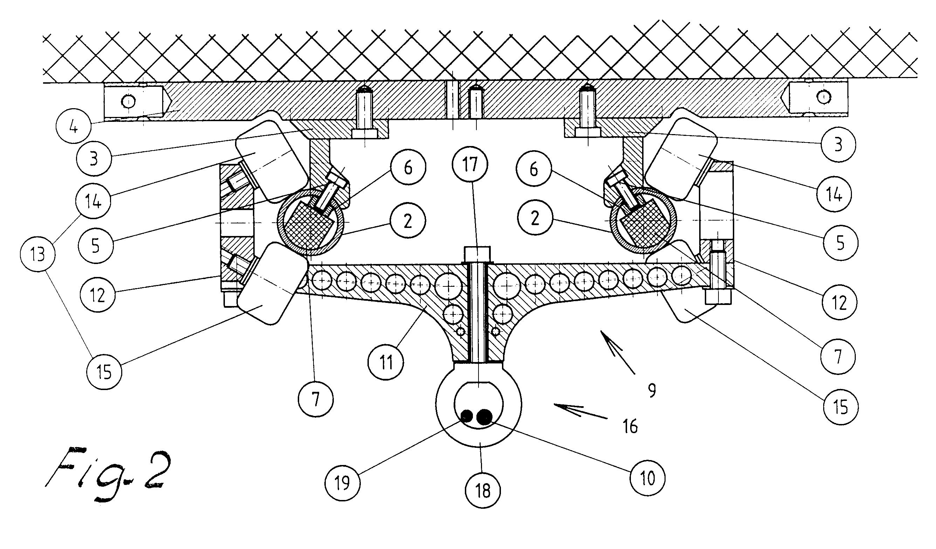

Bei dem Ausführungsbeispiel der Erfindung gemäß den Fig. 1 und 2 sind die Schwellen 4 an einer nicht näher bezeichneten Raumdecke oder an einem Traggerüst oder beispielsweise an der Unterseite eines Tribünendaches eines Fußballstadions befestigt. In diesem Fall wird die Kamera-Fahrvorrichtung in Überkopf-Fahrt bewegt.

Auf dem Schienenpaar 1 sind sowohl ein Wagen 8 für die Kamera, als auch im Abstand zueinander angeordnete Kabelträger 9 für ein oder mehrere Kabel 10 verfahrbar angeordnet.

Zur Erzielung einer leichten Bauweise weisen die Kabelträger 9 (Fig.2) jeweils einen sich quer zu den Schienen erstreckenden Steg 11 auf, an dessen Enden jeweils eine im wesentlichen vertikal angeordnete Lagerplatte 12 befestigt ist. Jede der beiden Lagerplatten 12 dient zur Aufnahme von zwei Rollenpaaren 13, die Bereich des hinteren und vorderen Endes einer jeden Lagerplatte 12 angeordnet sind. Wie hierzu aus Fig.2 ersichtlich, sind die Achsen der beiden Rollen 14,15 eines jeden Rollenpaares 13 derart in den Lagerplatten 12 aufgenommen, daß die Rolle 15 eines jeden Rollenpaares 13 an der der schalenförmigen Aufnahme der Schienen 2 gegenüberliegenden Seite derselben anliegt.

Beim in den Figuren 1 und 2 gezeigten Ausführungsbeispiel ist die Achse der jeweils unteren Rolle 15 eines jeden Rollenpaares 13 im Winkel von ca 30° zur Horizontalen angeordnet. Demzufolge ist die Achse der jeweils oberen Rolle 14 eines jeden Rollenpaares 13 ebenfalls im Winkel von ca 30° zur Horizontalen angeordnet. Die beiden Rollen 14,15 eines jeden Rollenpaares 13 schließen somit einen Winkel von ca 60° ein. Selbstverständlich können die Achsen der Rollen 14,15 auch in einem anderen Winkel zur Horizontalen angeordnet werden. Da jeder der Kabelträger 9 an vier Stellen durch jeweils ein Rollenpaar 13 geführt ist, ergibt sich für die Kabelträger 9 eine formschlüssige Führung. Zur Erzielung eines leichten und vor alten Dingen geräuscharmen Laufes der Rollen 14,15 können deren Achsen in den beiden Lagerplatten 12 wälzgelagert sein.

Es liegt selbstverständlich im Rahmen der Erfindung, wenn jeder der Kabelträger 9 mehr als vier Rollenpaare 13 aufweist. Hinsichtlich der Anordnung und der Anzahl der Rollenpaare 13 ist lediglich wichtig, daß diese derart an den Schienen 2 angreifen, daß sich für die Kabelträger 9 eine formschlüssige Führung ergibt, wobei zur Vermeidung von Querkräften eine symmetrische Anordnung der Rollen 14,15 bzw der Rollenpaare 13 von Vorteil ist. Selbstverständlich ist es im Rahmen der Erfindung ohne weiteres möglich, anstelle der Rollenpaare jeweils eine Anordnung von drei oder gar vier Rollen zu verwenden.

An der Unterseite des Steges 11 eines jeden Kabelträgers 9 ist ein Aufnahmeelement 16 für jeweils mindestens ein Kabel 10 vorgesehen. Die Aufnahmeelemente 16 sind von jeweils einer mit einem Zapfen 17 versehenen Ringöse 18 gebildet. Der Zapfen 17 einer jeden Ringöse 18 ist im jeweiligen Steg 11 frei drehbar gelagert, sodaß jede der Ringösen 18 um eine (bei Horizontal-Fahrt) im wesentlichen vertikal gerichtete Achse schwenkbar ist. Die Kabel 10 werden in aus Fig.2 ersichtlicher Art durch die Ringösen 18 geführt und vorzugsweise an diesen beispielsweise mit sogenannten Kabelbindern befestigt. Die Kabel 10 sind somit schlaufenähnlich aufgehängt; in ihrer nicht ausgezogenen Lage können die einzelnen Kabelträger 9 dicht aneinander anliegen, sodaß auch die Kabelschlaufen nahezu dicht aneinander anliegen.

Um beim Auseinanderziehen der Kabelschlaufen die jeweiligen Abschnitte des Kabels 10 nicht mit der zur Bewegung der jeweils hinter diesen angeordneten Kabelträger 9 erforderlichen Kraft zu belasten, ist zwischen jeweils zwei einander benachbarten Kabelträgern 9 ein Zugmittel 19 vorgesehen, dessen Enden an den Aufnahmeelementen 16 befestigt sind. Die Länge des jeweiligen Zugmittels 19 ist dabei etwas kürzer als die Länge des entsprechenden Kabelabschnittes, sodaß die Zugkraft für die einem Kabelträger 9 nachfolgenden Kabelträger 9 nicht durch das Kabel 10, sondern durch die jeweiligen Zugmittel 19 übertragen wird.

Um insbesondere während einer Talfahrt der Kamera-Fahrvorrichtung den Aufprall des vorderen Kabelträgers 9 auf den Wagen 8 sowie das Aufeinanderprallen der einzelnen Kabelträger 9 kräfteund auch geräuschmäßig abzufangen, kann an mindestens jeweils einer Stirnseite sowohl des Wagens 8 als auch der Kabelträger 9 ein (nicht dargestellter) Auflaufpuffer vorgesehen sein. Dieser kann ähnlich einem entsprechend angeordneten Stoßdämpfer von einem Teleskoppuffer oder auch von einer federnd angeordneten Platte gebildet sein.

Wie vorstehend schon ausgeführt, sind sowohl der Wagen 8 als auch die Kabelträger 9 auf dem Schienenpaar 1 bzw auf dessen Schienen 2 verfahrbar.

Der hinsichtlich seiner Datailausbildung nicht näher interessierende und deshalb auch nicht im Detail dargestellte Wagen 8 weist bei den gezeigten Ausführungsbeispielen die gleiche Rollenanordnung wie diejenige der Kabelträger 9 auf, sodaß auch er auf dem Schienenpaar 1 verfahrbar und formschlüssig geführt ist.

Die Verwendung gleicher Rollen und auch gleicher Rollenanordnungen beim Wagen 8 und den Kabelträgern 9 ist aus wirtschaftlicher Sicht zwar sehr günstig, jedoch ist dies aus funktioneller Sicht nicht erforderlich. Wichtig ist lediglich, daß der Wagen 8 auf den Schienen 2 verfahrbar und formschlüssig geführt ist. Hierzu ist, wie bei den Kabelträgern 9, lediglich sicherzustellen, daß die Anzahl und Anordnung der Rollen sowie die Anzahl der Rollenpaare so getroffen ist, daß diese derart an den Schienen 2 angreifen, daß sich für den Wagen 8 eine formschlüssige Führung ergibt, wobei auch hier zur Vermeidung von Querkräften eine symmetrische Anordnung der Rollen bzw der Rollenpaare von Vorteil ist. Auch hier ist es im Rahmen der Erfindung ohne weiteres möglich, anstelle der Rollenpaare jeweils eine Anordnung von drei oder gar vier Rollen zu verwenden.

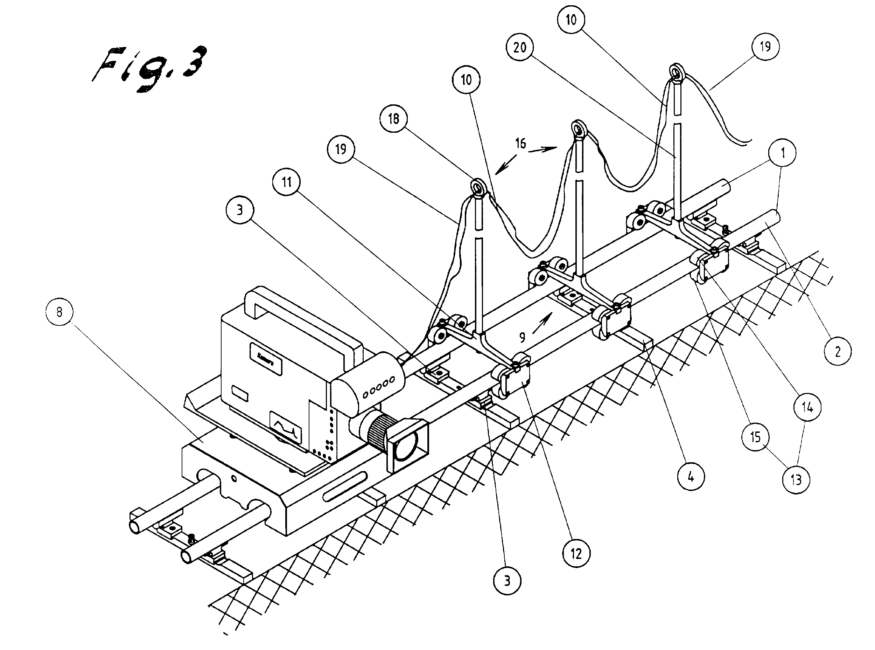

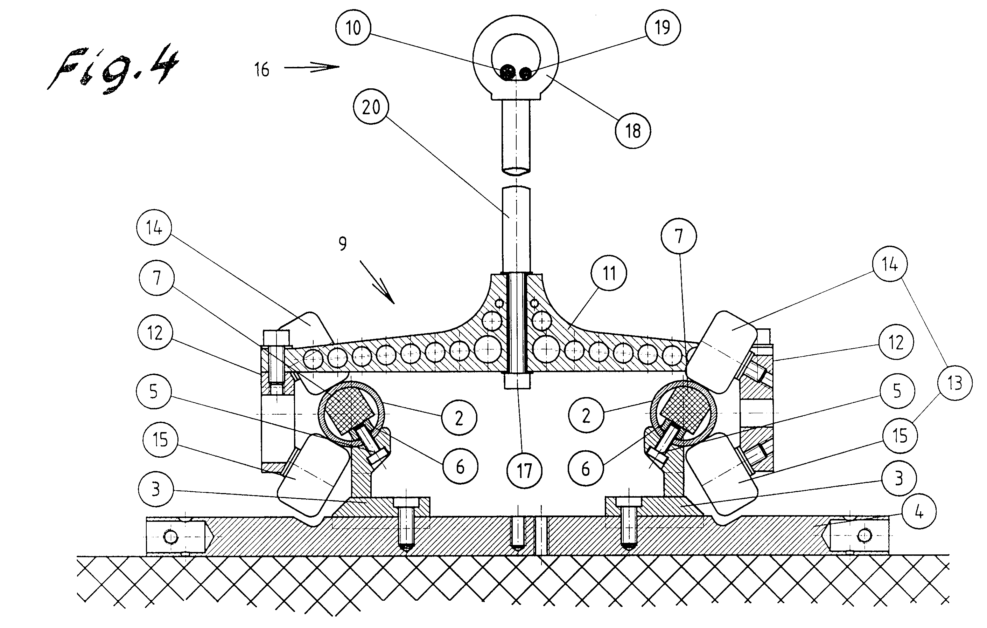

Das in den Fig. 3 und 4 dargestellte zweite Ausführungsbeispiel der Erfindung entspricht hinsichtlich seines grundsätzlichen Aufbaus und seiner konstruktiven Ausführungsform in nahezu vollem Umfang dem Aufbau und der konstruktiven Ausführungsform des ersten Ausführungsbeispiels. Daher sind zur ersten Ausführungsform gleiche Teile der zweiten Ausführungsform in den Fig. 3 und 4 mit den gleichen Bezugsziffern wie in den Fig. 1 und 2 versehen. Der Unterschied der zweiten Ausführungsform zur ersten Ausführungsform besteht lediglich darin, daß bei für Überkopf-Fahrten geeigneten ersten Ausführungsform die Schwellen 4 für die Schienen 2 an der Decke eines Raumes oder an einem entsprechenden Traggerüst befestigt sind, während bei der zweiten Ausführungsform die Schwellen 4 für die Schienen 2 auf dem Boden aufliegen und die Kamera-Fahrvorrichtung in dieser Einbaulage für Bodenfahrten nutzbar ist.

Da hierbei das Kabel 10 nicht nach unten herabhängen kann, sind die Aufnahmeelemente 16 der Kabelträger 9 nicht unmittelbar an deren Steg 11 befestigt. Vielmehr ist zwischen dem jeweiligen Steg 11 und dem Aufnahmeelement 16 jeweils ein vorzugsweise teleskopartig ausgebildeter Zwischenträger 20 vorgesehen, dessen unteres Ende mit dem Steg 11 verbunden ist, und dessen oberes Ende die Ringöse 18 des Aufnahmeelementes 16 trägt, die auch hier um eine (bei Horizonalfahrt) senkrecht gerichtete Achse schwenkbar ist.

## Patentansprüche

1. Kamera-Fahrvorrichtung mit einem mittels vorzugsweise vier Rollenpaaren auf einem Schienenpaar verfahrbaren Wagen für die Kamera, wobei die Achsen der Rollen eines jeden Rollenpaares des Wagens derart an diesem angeordnet sind, daß der Wagen auf den Schienen formschlüssig geführt ist, und mit auf einer Führungsbahn entlang der Fahrstrecke der Kamera bewegbaren Kabelträgern, die mit Aufnahmeelementen für jeweils mindestens ein Kabel versehen sind,
dadurch gekennzeichnet, daß
die Führungsbahn für die Kabelträger (9) von den Schienen (2) für den Wagen (8) gebildet ist, und die Kabelträger (9) jeweils vorzugweise vier Rollenpaare (13) aufweisen, deren Rollen (14,15) an den Kabelträgern (9) derart angeordnet sind, daß die Kabelträger (9) auf den Schienen (2) des Wagens (8) verfahrbar und formschlüssig geführt sind.

2. Kamera-Fahrvorrichtung nach Anspruch 1, dadurch gekennzeichnet, daß
die Anordnung der Rollen (14,15) an den Kabelträgern (9) in Bezug auf ihre Relativlage zu den Schienen (2) der Anordnung der Rollen an dem Wagen (8) entspricht.

3. Kamera-Fahrvorrichtung nach Anspruch 1, dadurch gekennzeichnet, daß
die Schienen (2) des Schienenpaares (1) einem im wesentlichen kreisförmigen Querschnitt aufweisen.

4. Kamera-Fahrvorrichtung nach Anspruch 1, dadurch gekennzeichnet, daß
die Aufnahmeelemente (16) der Kabelträger (9) um jeweils eine senkrecht zu den Schienen (2) verlaufende Achse schwenkbar sind.

5. Kamera-Fahrvorrichtung nach Anspruch 1, dadurch gekennzeichnet, daß
an den Aufnahmeelementen (16) von jeweils zwei einander benachbarten Kabelträgern (9) jeweils ein Zugmittel (19) befestigt ist, dessen gestreckte Länge um einen bestimmten Betrag kleiner als die Länge des an diesen Aufnahmeelementen befestigten Abschnittes des Kabels (10) ist.

6. Kamera-Fahrvorrichtung nach Anspruch 1, dadurch gekennzeichnet, daß
zwischen einem Steg (11) des Kabelträgers (9) und dem Aufnahmeelement (16) ein teleskopartiger Zwischenträger (20) angeordnet ist.

7. Kamera-Fahrvorrichtung nach Anspruch 1, dadurch gekennzeichnet, daß
an mindestens einer der Stirnseiten der Kabelträger (9) und / oder des Wagens (8) jeweils mindestens ein Auflaufpuffer vorgesehen ist.
